# EUROPÄISCHE PATENTANMELDUNG

(11) **EP 3 809 010 A1**
(43) Veröffentlichungstag der Anmeldung: **21.04.2021**
(21) Anmeldenummer: 20197660.2
(22) Anmeldetag: 23.09.2020
(51) Int. Cl.: F16F 7/08, F16F 7/09

(54) **REIBUNGSDÄMPFER**

(30) Priorität: 16.10.2019 DE 102019215931
(71) Anmelder: SUSPA GmbH, 90518 Altdorf (DE)
(72) Erfinder: Pelczer, Andreas, 90518 Altdorf (DE); Bauer, Michael, 92271 Freihung (DE); Ertl, Sebastian, 92265 Edelsfeld (DE); Mayer, Marco, 92237 Sulzbach-Rosenberg (DE); Weder, Michael, 90455 Nürnberg (DE)
(74) Vertreter: Rau, Schneck & Hübner Patentanwälte Rechtsanwälte PartGmbB

(57) **Zusammenfassung**

Reibungsdämpfer ist mit einem eine Längsachse (4) aufweisenden rohrförmigen Gehäuse (2), mit einem in dem Gehäuse (2) entlang der Längsachse (4) verlagerbaren Stößel (3), der an einem offenen Ende (11) des Gehäuses (2) herausgeführt ist, mit einem am Stößel (3) anliegenden Reibelement (31) und mit einer an dem offenen Ende (11) des Gehäuses (2) mit axialer Vorspannung bezogen auf die Längsachse (4) angebrachten Kappe (22) ausgeführt.

## Beschreibung

Die vorliegende Patentanmeldung nimmt die Priorität der deutschen Patentanmeldung DE 10 2019 215 931.1 in Anspruch, deren Inhalt durch Bezugnahme hierin aufgenommen wird.

Die Erfindung betrifft einen Reibungsdämpfer, der insbesondere für Waschmaschinen eingesetzt wird.

Ein derartiger Reibungsdämpfer ist in der DE 38 11 742 A1 offenbart. Bei dem Reibungsdämpfer dient ein Dämpfungsbelag zur Erzeugung einer Reibungskraft zwischen einem Gehäuse und einem dazu längs verlagerbaren Stößel. Der Dämpfungsbelag ist in einer Kappe angeordnet, die als Dämpfungsgehäuse dient. Die Kappe ist an dem Gehäuse axial festgelegt. Die axiale Festlegung der Kappe erfolgt beispielsweise durch Kleben, Schweißen oder Umbördeln des Gehäuses. Diese Verbindungen sind fertigungstechnisch aufwändig. Die Kappe kann auch mittels Presssitz oder durch eine Verrastung erfolgen. Infolge von Toleranzabweichungen bei der Fertigung der Kappe und/oder des Gehäuses besteht das Risiko, dass sich die Kappe von dem Gehäuse löst. Ein axiales Spiel zwischen der Kappe und dem Gehäuse infolge von Toleranzabweichungen kann eine unerwünschte Geräuschbelastung im Betrieb des Reibungsdämpfers verursachen. Bei Zugbeanspruchung des Dämpfers besteht das Risiko, dass sich die Verrastung löst.

Weitere Reibungsdämpfer sind bekannt aus DE 103 36 060 A1, DE 20 2016 102 547 U1, DE 20 19 134 A und WO 2014/180 494 A1.

Der Erfindung liegt die Aufgabe zugrunde, einen Reibungsdämpfer zu schaffen, bei dem die Befestigung einer Kappe am Gehäuse unkompliziert und zuverlässig ausgeführt ist.

Die Aufgabe wird durch die Merkmale des Anspruchs 1 gelöst. Der Kern der Erfindung liegt darin, dass eine Kappe an einem Gehäuse eines Reibungsdämpfers mit axialer Vorspannung bezogen auf eine Längsachse des Gehäuses angebracht ist. Durch die axial vorgespannte Anordnung der Kappe am Gehäuse ist ausgeschlossen, dass ein axiales Spiel zwischen der Kappe und dem Gehäuse entsteht. Eine unerwünschte Geräuschbelastung durch Klappern der Kappe am Gehäuse ist zuverlässig vermieden.

Die Kappe ist insbesondere als einteiliges Bauteil ausgeführt. Die Kappe ist insbesondere aus einem leichtbauenden Material hergestellt. Die Kappe ist insbesondere aus einem Material mit elastischen Eigenschaften hergestellt. Die Kappe ist insbesondere aus einem Kunststoffmaterial hergestellt, insbesondere im Spritzgussverfahren.

Das Gehäuse ist rohrförmig, insbesondere zylinderrohrförmig, und insbesondere dünnwandig ausgeführt. Es sind grundsätzlich auch andere Hohlprofilformen für die Ausführung des Gehäuses denkbar. Das Gehäuse ist insbesondere aus einem Leichtbauwerkstoff, wie beispielsweise ein Leichtmetall, insbesondere eine Aluminiumlegierung oder Kunststoffmaterial hergestellt, insbesondere im Spritzgussverfahren.

In dem Gehäuse ist entlang der Längsachse ein Stößel verlagerbar angeordnet. Die Außenkontur des Stößels korrespondiert mit der Innenkontur des Gehäuses. Der Stößel ist insbesondere entlang des Gehäuses geführt verlagerbar. Dazu können an einer Innenfläche des Gehäuses axiale Führungsstege vorgesehen sein, an welchen der Stößel mit seiner Außenseite im Wesentlichen spielfrei, aber reibungsfrei anliegt. Der Stößel ist insbesondere hohl, insbesondere rohrförmig ausgeführt. Der Stößel ist insbesondere aus einem Leichtbaumaterial hergestellt, wie beispielsweise eine Aluminiumlegierung oder ein Kunststoffmaterial. Vorteilhaft ist es, wenn der Stößel aus einem Material mit guten Wärmeleiteigenschaften hergestellt ist wie beispielsweise Stahl, Aluminium oder eine Aluminiumlegierung. Der Stößel weist dann eine gute Wärmeableitung auf. Vorzugsweise beträgt die Wärmeleitfähigkeit λ des Stößelmaterials mindestens 30 W/(m·K), insbesondere mindestens 40 W/(m·K), inbesondere mindestens 50 W/(m·K), insbesondere mindestens 75 W/(m·K), inbesondere mindestens 100 W/(m·K), inbesondere mindestens 150 W/(m·K), inbesondere mindestens 200 W/(m·K) und insbesondere mindestens 230 W/(m·K). Bei geringen Reibkräften ist die Wärmeentwicklung am Stößel reduziert. In diesem Fall kann der Stößel aus Kunststoffmaterial hergestellt sein.

Der Reibungsdämpfer weist ein Reibelement auf, das an dem Stößel anliegt. Das Reibelement dient zur Erzeugung einer Reibkraft gegenüber dem Gehäuse bei einer Axialverlagerung des Stößels. Das Reibelement liegt insbesondere an einer Außenseite des Stößels an. Das Reibelement ist insbesondere als Reibstreifen ausgeführt, der insbesondere um die Außenseite des Stößels ringförmig gelegt ist. Das Reibelement kann auch mehrere Reibstreifen umfassen, die entlang des Umfangs des Stößels und/oder in axialer Richtung des Stößels hintereinander angeordnet sind. Das Reibelement kann auch als Reibring ausgeführt sein. Das Reibelement umfasst insbesondere ein Reibmaterial, insbesondere ein elastisches Schaummaterial. Zur Verbesserung der Reibungsbedingungen kann das Reibmaterial mit Fett getränkt sein.

Ein Reibungsdämpfer gemäß Anspruch 2 ermöglicht eine zuverlässige, insbesondere selbstsichernde Verrastung der Kappe am Gehäuse. Das Gehäuse weist mindestens einen Rasthaken und insbesondere mehrere Rasthaken, insbesondere genau zwei Rasthaken auf, die bezüglich der Längsachse diametral gegenüberliegend an dem Gehäuse angeordnet sind. Dadurch, dass der Rasthaken am Gehäuse angeordnet ist, ist die Verrastung der Kappe besonders zuverlässig. Eine unbeabsichtigte Entrastung ist im Wesentlichen ausgeschlossen.

Bei dem Reibungsdämpfer gemäß Anspruch 3 ist die selbstsichernde Anordnung der Kappe am Gehäuse verbessert.

Eine Ausführung des Reibungsdämpfers gemäß Anspruch 4 ermöglicht eine unkomplizierte Anbringung der Kappe am Gehäuse mit axialer Vorspannung. Die Rasthakenlänge ist größer als der axiale Rastausnehmungsabstand und beträgt insbesondere mindestens das 1,01-fache, insbesondere mindestens das 1,02-fache, insbesondere mindestens das 1,05-fache, insbesondere mindestens das 1,08-fache, insbesondere mindestens das 1,10-fache und insbesondere das 1,15-fache des axialen Rastausnehmungsabstands. Insbesondere dient die Rastverbindung zwischen der Kappe und dem Gehäuse zur Aufbringung der axialen Vorspannung. Die axiale Vorspannung der Kappe ist zuverlässig gewährleistet.

Ein Reibungsdämpfer gemäß Anspruch 5 vereinfacht die Montage der Kappe am Gehäuse.

Ein Reibungsdämpfer gemäß Anspruch 6 ermöglicht eine zusätzlich verbesserte Montage der Kappe.

Ein Reibungsdämpfer gemäß Anspruch 7 gewährleistet eine axial definierte Anordnung der Kappe am Gehäuse.

Ein Reibungsdämpfer gemäß Anspruch 8 gewährleistet eine verdrehsichere Anbringung der Kappe am Gehäuse.

Ein Reibungsdämpfer gemäß Anspruch 9 gewährleistet eine unkomplizierte Aufnahme der Kappe am Gehäuse.

Ein Reibungsdämpfer gemäß Anspruch 10 ermöglicht eine Stauchung des Reibelements in axialer Richtung und/oder in radialer Richtung bezogen auf die Längsachse. Der Reibungsdämpfer weist definierte, insbesondere veränderlich einstellbare Reibbedingungen auf. Die axiale Vorspannung der Kappe am Gehäuse ist verbessert.

Die Kappe des Reibungsdämpfers gemäß Anspruch 11 ist in sich formstabil. Es ist sichergestellt, dass Fett, mit dem das Reibelement beaufschlagt ist, nicht unbeabsichtigt aus der Kappe austritt. Die Funktionssicherheit und die Lebensdauer des Reibungsdämpfers sind erhöht.

Sowohl die in den Patentansprüchen angegebenen Merkmale als auch die in dem nachfolgenden Ausführungsbeispiel des erfindungsgemäßen Reibungsdämpfers angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterentwicklungen des Erfindungsgegenstandes keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine Seitenansicht eines erfindungsgemäßen Reibungsdämpfers,
- Fig. 2: eine Längsschnittdarstellung gemäß Schnittlinie II-II in Fig. 1,
- Fig. 3: eine Schnittdarstellung gemäß Schnittlinie III-III in Fig. 2,
- Fig. 4: eine perspektivische Darstellung einer Kappe des Reibungsdämpfers in Fig. 1,
- Fig. 5: eine Schnittdarstellung gemäß Schnittlinie V-V in Fig. 4,

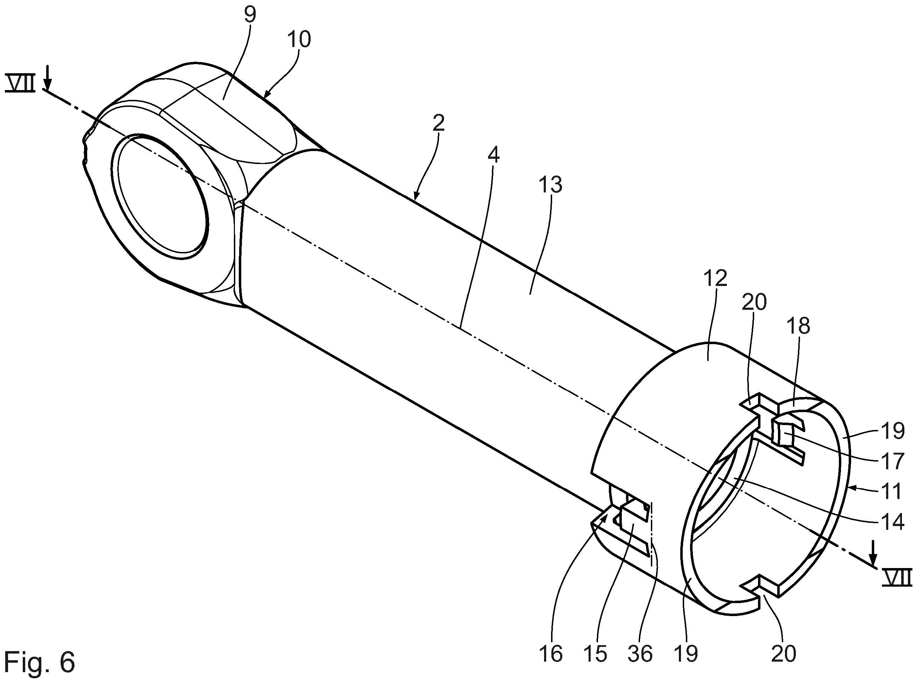

- Fig. 6: eine perspektivische Darstellung eines Gehäuses des Reibungsdämpfers in Fig. 1,

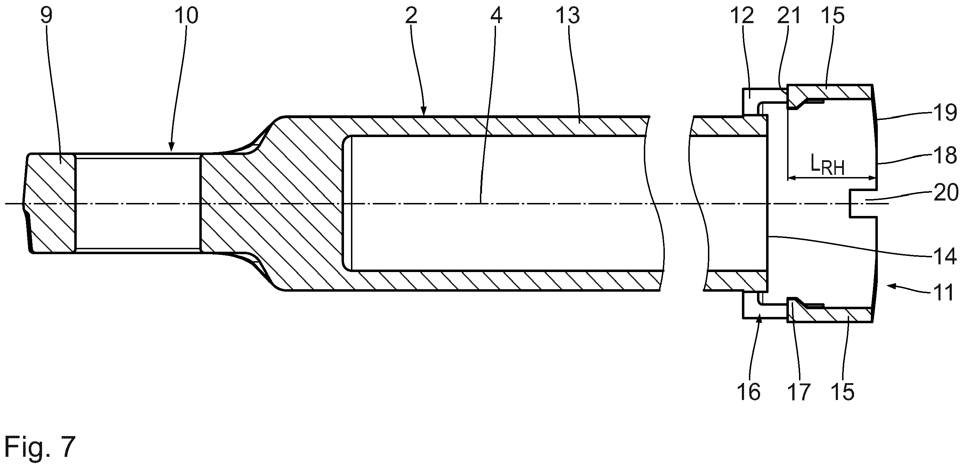

- Fig. 7: eine Schnittdarstellung des Gehäuses gemäß Schnittlinie VII-VII in Fig. 6, und
- Fig. 8: eine vergrößerte Detaildarstellung des Details VIII in Fig. 1.

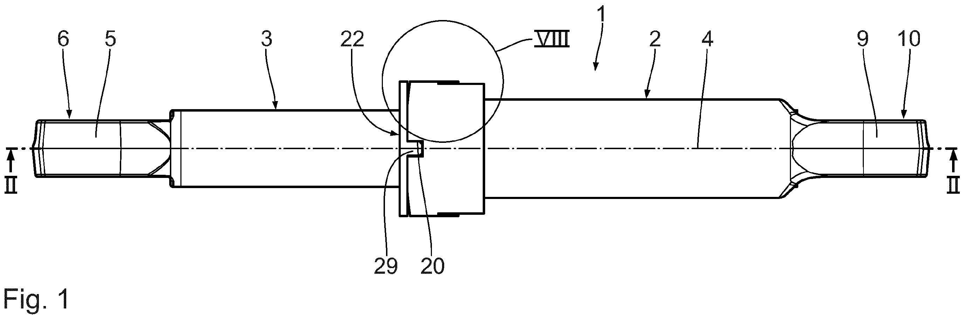

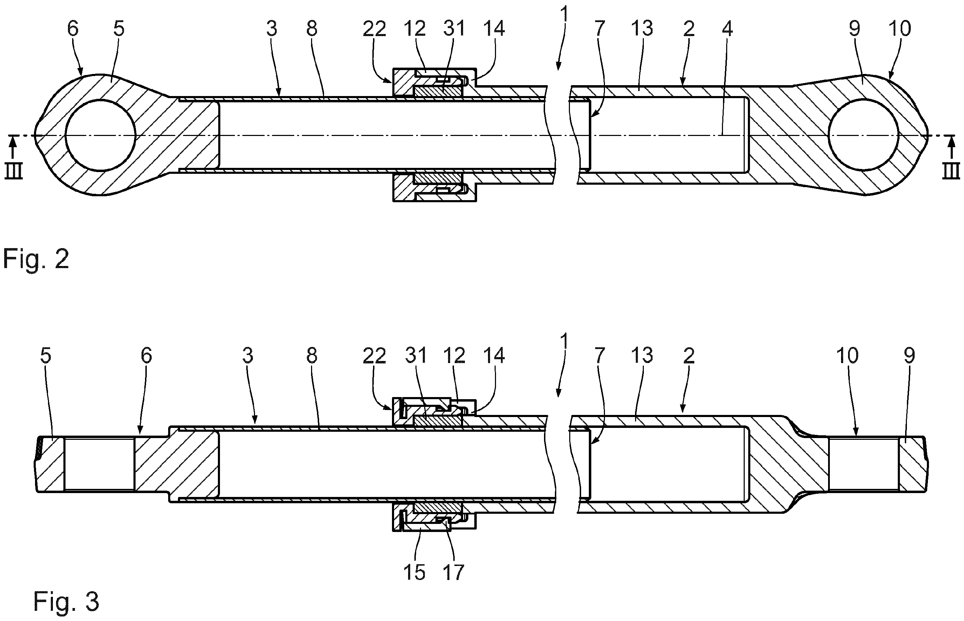

Ein in Fig. 1 bis 3 als Ganzes mit 1 dargestellter Reibungsdämpfer dient zur Verwendung in Waschmaschinen zur Schwingungsdämpfung. Der Reibungsdämpfer 1 umfasst ein zylindrisches Gehäuse 2 und einen rohrförmigen Stößel 3, der entlang einer Längsachse 4 des Gehäuses 2 in diesem geführt verlagerbar angeordnet ist.

Der Stößel 3 weist ein erstes Befestigungselement 5 auf, mit dem der Reibungsdämpfer 1 an einem Gegenstand befestigt werden kann. Das erste Befestigungselement 5 ist an einem freien Ende 6 des Stößels 3 angeordnet. Das freie Ende 6 des Stößels 3 ist dem gehäuseseitigen Ende 7, mit dem der Stößel 3 in dem Gehäuse 2 angeordnet ist, gegenüberliegend angeordnet.

Der Stößel 3 umfasst ein Stößelrohr 8, das insbesondere aus einem Leichtbaumaterial, insbesondere aus einem Leichtmetall, insbesondere aus einer Aluminiumlegierung hergestellt ist. Der Stößel 3 kann auch aus einem anderen Material hergestellt sein. Gemäß dem gezeigten Ausführungsbeispiel ist an dem freien Ende 6 in das Stößelrohr 8 das erste Befestigungselement 5 stirnseitig eingesetzt und daran befestigt. Der Stößel 3 kann auch einteilig hergestellt sein.

Das Gehäuse 2 weist ein zweites Befestigungselement 9 auf, das an einem freien Ende 10 des Gehäuses 2 angeordnet ist. Die Befestigungselemente 5, 9 sind entlang der Längsachse 4 an dem Reibungsdämpfer 1 gegenüberliegend angeordnet. Die Befestigungselemente 5, 9 dienen zur Befestigung des Reibungsdämpfers 1 in der Waschmaschine.

Das Gehäuse 2 ist insbesondere einteilig aus Kunststoffmaterial, insbesondere durch Spritzguss, hergestellt. Das Gehäuse 2 weist ein dem freien Ende 10 gegenüberliegend angeordnetes offenes Ende 11 auf.

Das Gehäuse 2 weist einen Aufnahmeabschnitt 12 und einen Führungsabschnitt 13 auf. Der Führungsabschnitt 13 dient zur axialen Führung des Stößels 3 in dem Gehäuse 2. Entlang des Führungsabschnitts 13 können an einer Innenseite des Gehäuses 2 nicht näher dargestellte Führungselemente, insbesondere axial orientierte Führungsstege, die insbesondere an der Innenseite des Gehäuses 2 radial nach Innen vorspringen, vorgesehen sein.

Der Aufnahmeabschnitt 12 ist gegenüber dem Führungsabschnitt 13 radial erweitert. Der Aufnahmeabschnitt 12 ist mit dem Führungsabschnitt 13 über eine Ringschulter 14 einstückig verbunden. Der Aufnahmeabschnitt 12 erstreckt sich bis zum offenen Ende 11 des Gehäuses 2.

Das Gehäuse 2 weist zwei, bezüglich der Längsachse 4 diametral gegenüberliegend angeordnete Rasthaken 15 auf. Die Rasthaken 15 erstrecken sich am Gehäuse 2 im Bereich des Aufnahmeabschnitts 12 in einer Richtung parallel zur Längsachse 4. Dazu weist das Gehäuse 2 im Bereich der Rasthaken 15 jeweils eine Materialausnehmung 16 auf, um die für den Verrast- und Entrast-Vorgang erforderliche Strukturflexibilität des Rasthakens 15 zu gewährleisten. Vorteilhaft ist es, wenn das Gehäuse 2 aus einem Material hergestellt ist, das eine Materialelastizität aufweist. Gemäß dem gezeigten Ausführungsbeispiel ist das Gehäuse 2 aus Kunststoff hergestellt, insbesondere im Spritzgussverfahren. Der Elastizitätsmodul des verwendeten Kunststoffmaterials liegt insbesondere zwischen 1000 N/mm² und 4000 N/mm², insbesondere zwischen 1500 N/mm² und 3000 N/mm² und insbesondere zwischen 2000 N/mm² und 2500 N/mm².

Die Rasthaken 15 sind jeweils einteilig am Gehäuse 2, insbesondere am Aufnahmeabschnitt 12 angeformt.

Jeder Rasthaken 15 weist eine radial nach Innen vorspringende Rastnase 17 auf. Der Rasthaken 15 ist schwenkbar um eine Schwenkachse 36 am Aufnahmeabschnitt 12 verlagerbar angeformt. Die Schwenkachse 36 ist senkrecht zur Längsachse 4 orientiert und verläuft beabstandet zu der Längsachse 4 im Bereich der Außenwand des Aufnahmeabschnitts 12. Durch die Schwenkbarkeit um die Schwenkachse 36 kann der Rasthaken 15 im Wesentlichen in radialer Richtung bezogen auf die Längsachse 4 an dem Aufnahmeabschnitt 12 nach Innen bzw. nach Außen geschwenkt werden.

Das Gehäuse 2 weist am offenen Ende 11 eine ringförmige Stirnfläche 18 auf, die uneben ausgeführt ist. Entlang des Umfangs der Stirnfläche 18 sind jeweils im Bereich der Rasthaken 15 Vertiefungen 19 vorgesehen. Die Vertiefungen 19 sind jeweils muldenförmig, insbesondere gekrümmt ausgeführt.

An dem offenen Ende 11 sind zwei schlitzförmige Ausnehmungen 20 angeordnet, die sich ausgehend von der Stirnfläche 18 in einer Richtung parallel zur Längsachse 4 erstrecken. Die Ausnehmungen 20 sind bezogen auf die Längsachse 4 diametral gegenüberliegend angeordnet. Es ist denkbar, dass nur eine Ausnehmung 20 oder mehr als zwei Ausnehmungen 20 vorgesehen sind. Gemäß dem gezeigten Ausführungsbeispiel sind die Ausnehmungen 20 jeweils in einem Bereich der Stirnfläche 18 angeordnet, in dem keine Vertiefung 19 vorgesehen ist.

Der Rasthaken 15 weist eine entlang der Längsachse 4 orientierte Rasthakenlänge L_{RH} auf. Die Rasthakenlänge L_{RH} ist definiert durch den axialen Abstand der Stirnfläche 18, insbesondere im Bereich ohne Vertiefung 19, bis zu einer der Stirnfläche 18 abgewandt angeordneten Rastnasenstirnfläche 21 der Rastnase 17.

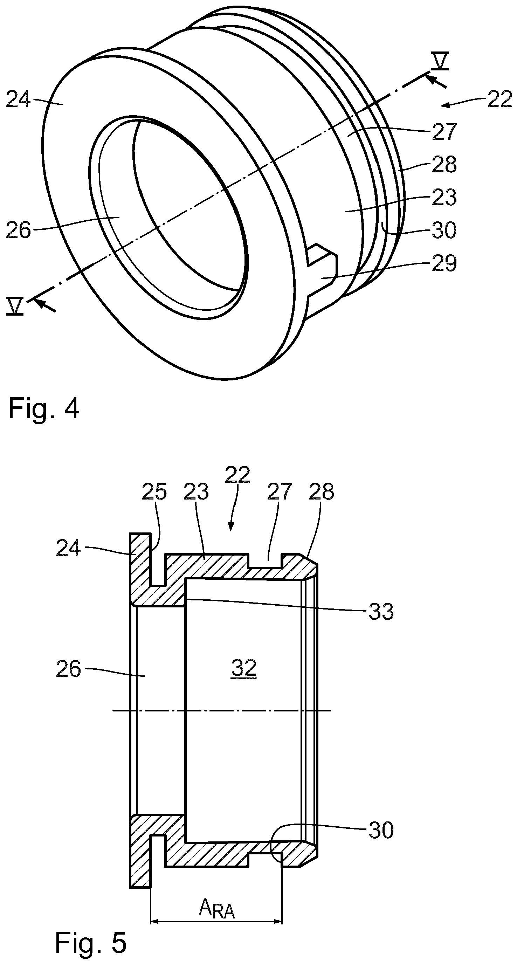

Der Aufnahmeabschnitt 12 dient zur Aufnahme einer Kappe 22, die in Fig. 4 und 5 näher dargestellt ist. Die Kappe 22 ist im Wesentlichen hülsenartig ausgeführt und weist einen umlaufend geschlossenen Hülsenabschnitt 23 auf. Einteilig mit dem Hülsenabschnitt 23 verbunden ist ein Radialbund 24, der mit seiner dem Hülsenabschnitt 23 zugewandten Unterseite 25 zum Anliegen an der Stirnfläche 18 des Gehäuses 2 dient.

Die Kappe 22 weist eine Durchgangsöffnung 26 auf, durch die hindurch der Stößel 3 geführt wird. Im Bereich des Hülsenabschnitts 23 ist eine umlaufende Außennut 27 vorgesehen, die eine Rastausnehmung bildet. An seinem dem Radialbund 24 gegenüberliegenden Ende weist die Kappe 22 eine Einführschräge 28 auf, die das Einführen der Kappe 22 in das Gehäuse 2 erleichtert.

Die Kappe 22 weist einen axialen Rastausnehmungsabstand A_{RA} auf, der den axialen Abstand der der Unterseite 25 abgewandten Nutflanke 30 der Außennut 27 von der Unterseite 25 definiert.

Die Rasthakenlänge L_{RH} ist größer als der axiale Rastausnehmungsabstand A_{RA}. Insbesondere gilt L_{RH} ≥ 1,01 x A_{RA}, insbesondere L_{RH} ≥ 1,02 x A_{RA}, insbesondere L_{RH} ≥ 1,05 x A_{RA}, insbesondere L_{RH} ≥ 1,08 x A_{RA}, insbesondere L_{RH} ≥ 1,10 x A_{RA} und insbesondere L_{RH} ≥ 1,15 x A_{RA}.

Die Kappe 22 weist eine Reibelementaufnahme 32 auf, die als zylinderförmige Ausnehmung im Bereich des Hülsenabschnitts 23 ausgeführt ist. Gegenüber der Durchgangsöffnung 26 weist die Reibelementaufnahme 32 einen vergrößerten Innendurchmesser auf. Am Übergang von der Durchgangsöffnung 26 zur Reibelementaufnahme 32 ist eine Anlageschulter 33 ausgebildet.

An der Unterseite 25 sind zwei Axialstege 29 angeformt. Die Axialstege 29 sind diametral gegenüberliegend am äußeren Umfang des Radialbundes 24 angeordnet.

Im montierten Zustand der Kappe 22 am Gehäuse 2 greifen die Axialstege 29 in die korrespondierenden Ausnehmungen 20 am Gehäuse 2. Die Kappe 22 ist dadurch verdrehsicher gegenüber der Längsachse 4 am Gehäuse 2 gehalten.

Die axiale Sicherung der Kappe 22 am Gehäuse 2 erfolgt durch die Rasthaken 15 mit den Rastnasen 17, die in die Rastausnehmungen, also in die Außennut 27, der Kappe 22 eingreifen.

In dem Gehäuse 2, insbesondere im Bereich des Aufnahmeabschnitts 12, ist ein Reibelement 31 angeordnet. Das Reibelement 31 ist gemäß dem gezeigten Ausführungsbeispiel als Reibstreifen ausgeführt, der um den Stößel 3 herumgelegt ist. Das Reibelement 31 ist in der Reibelementaufnahme 32 der Kappe 22 angeordnet.

Das Reibelement 31 ist in dem Reibungsdämpfer 1 in radialer Richtung bezogen auf die Längsachse 4 zwischen der Kappe 22 und dem Stößel 3 angeordnet und insbesondere vorgespannt. In axialer Richtung bezogen auf die Längsachse 4 ist das Reibelement 31 zwischen der Anlageschulter 33 der Kappe 22 und der Ringschulter des Gehäuses 2 angeordnet, insbesondere vorgespannt angeordnet.

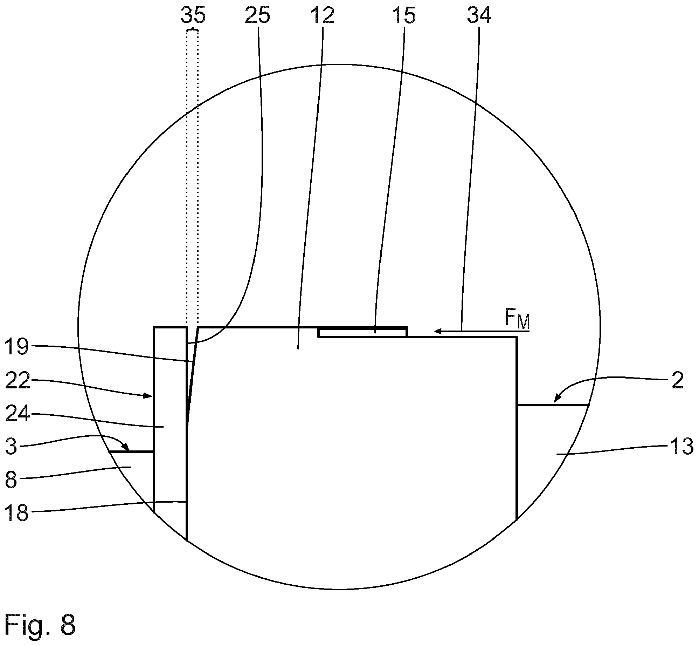

Im Folgenden wird die Montage des Reibungsdämpfers 1 und insbesondere die axial vorgespannte Anordnung der Kappe 22 am Gehäuse 2 näher erläutert. Die Montage der Kappe 22 am Gehäuse 2, insbesondere die Beaufschlagung der Rasthaken 15 mit der Montagekraft F_{M} ist in der Detaildarstellung in Fig. 8 gezeigt.

Zur Montage an dem Gehäuse 2 wird die Kappe 22 mit der Einführschräge 28 in das offene Ende 11 des Gehäuses 2 eingeführt und entlang der Längsachse 4 eingeschoben. Sobald die Einführschräge 28 der Kappe 22 mit den Rastnasen 17 der Rasthaken 15 in Kontakt kommt, wirkt eine der Einschiebekraft entgegenwirkende Widerstandskraft, die manuell überdrückt werden kann. Durch das weitere Einschieben der Kappe 22 werden die Rasthaken 15 radial nach außen geschwenkt, also von der Längsachse 4 weg. Die Kappe 22 wird soweit in das Gehäuse 2 geschoben, bis die Kappe 22 mit der Unterseite 25 an der Stirnseite 18 des Gehäuses 2 anliegt. Dabei ist die Kappe 22 bezüglich ihrer Drehposition um die Längsachse 4 fluchtend mit den Axialstegen 29 zu den schlitzförmigen Ausnehmungen 20 orientiert.

Da die Rasthakenlänge L_{RH} in demontiertem Zustand der Kappe 22 größer ist als der axiale Rastausnehmungsabstand A_{RA} können die Rasthaken 15 nicht ohne Weiteres in den Rastausnehmungen der Außennut 27 verrasten. Zum Verrasten der Rasthaken 15 ist es erforderlich, dass die Rasthaken 15 entlang einer Montagerichtung 34 mit einer Montagekraft F_{M} gedrückt werden. Die Montagerichtung 34 ist parallel zur Längsachse 4 orientiert und zu der Unterseite 25 der Kappe 22 hin gerichtet. Dadurch, dass im Bereich der Rasthaken 15 die Stirnfläche 18 die Vertiefung 19 aufweist, resultiert zwischen der Unterseite 25 des Radialbundes 24 und der Vertiefung 19 ein Axialspiel 35. Das Axialspiel 35 ermöglicht eine lokal begrenzte, elastische Deformation des Gehäuses 2, insbesondere im Bereich des Aufnahmeabschnitts 12 und insbesondere im Bereich des Rasthakens 15. Insbesondere ist das Axialspiel 35 größer als die Längendifferenz zwischen der Rasthakenlänge L_{RH} und dem axialen Rastausnehmungsabstand A_{RA}. Dadurch ist es möglich, dass die Kappe 22 entlang der Montagerichtung 34 soweit gedrückt werden kann, bis die Rastnase 17 in die Außennut 27 radial nach innen gedrückt werden kann, also die Einführschräge 28 hintergreift. Es ist denkbar, dass der Rasthaken 15 mit der Rastnase 17 während der Montage und bei Überwindung des Axialspiels 35 selbsttätig radial nach innen in die Außennut 27 aufgrund der elastischen Rückstellkraft einschnappt und ein manuelles Eindrücken des Rasthakens 15 entbehrlich ist.

Wenn der Rasthaken 15 mit der Rastnase 17 in die Außennut 27 eingerastet ist, kommt die Rastnasenstirnfläche 21 zur Anlage an der abgewandten Nutflanke 30. Der Rasthaken 15 ist zuverlässig und stabil in der Rastausnehmung der Kappe 22 eingerastet.

Nach Entlastung der Rastnase 17, also bei Wegfall der axialen Montagekraft F_{M}, wird der Rasthaken 15 aufgrund der eingeprägten elastischen Kraft infolge der lokalen Deformation in axialer und/oder radialer Richtung zu der Kappe 22 hin gedrückt. Da die Rasthakenlänge L_{RH} größer ist als der axiale Rastausnehmungsabstand A_{RA}, kann der Rasthaken 15 nicht mehr selbständig die Position einnehmen, die er im demontierten Zustand der Kappe 22 hatte. Der Rasthaken 15 bewirkt eine axiale Vorspannung auf die Kappe 22 am Gehäuse. Die Kappe 22 ist mit axialer Vorspannung am Gehäuse 2 gehalten. Insbesondere ist das Reibelement 31 zwischen der Anlageschulter 33 und der Ringschulter 14 axial vorgespannt angeordnet.

Gemäß dem gezeigten Ausführungsbeispiel ist das Reibelement 31 in radialer Richtung bezogen auf die Längsachse 4 vorgespannt zwischen dem Stößel 3 und der Kappe 22 angeordnet. Die radiale Vorspannung ergibt sich insbesondere dadurch, dass die Dicke des Reibelements 31 größer ist als die Breite des zwischen dem Stößel 3 und der Kappe 22 gebildeten Ringraums.

Das Reibelement 31 kann auch mit einem axialen Spiel zwischen der Ringschulter 14 und der Anlageschulter 33 angeordnet sein. Bei einer derartigen Anordnung würde der Reibungsdämpfer eine Freilauffunktion aufweisen. Die Freilauffunktion bedeutet, dass ein axialer Freilauf-Hub des Stößels 3 gegenüber dem Gehäuse 2 reibungsfrei möglich ist. Der Freilauf-Hub entspricht dem axialen Spiel, also der Differenz des axialen Abstands zwischen der Ringschulter 15 und der Anlageschulter 33 sowie der Länge des Reibelements 31. Für die Freilauffunktion ist es vorteilhaft, wenn die Dicke des Reibelements 31 kleiner, insbesondere geringfügig kleiner, ist als der ringförmige Zwischenraum zwischen der Außenfläche des Stößels 3 und der Innenfläche der Kappe 22. In diesem Fall wird das Reibelement 31 mit dem Stößel 3 in Folge der Haftreibung zwischen dem Reibelement 31 und dem Stößel 3 bei einer Hubbewegung desselben mitbewegt, bis das Reibelement 31 an der Ringschulter 14 bzw. der Anlageschulter 33 axial anliegt. Wenn eine weitere Axialverlagerung des Reibelements blockiert ist, tritt eine Relativbewegung zwischen dem Stößel 3 und dem Reibelement 31 auf, die dann eine Reibkraft bewirkt.

Eine Freilauffunktion tritt nicht auf, wenn durch die Flächenpressung zwischen dem Gehäuse 2 und dem Reibelement 31 einerseits und/oder zwischen dem Reibelement 31 und dem Stößel 3 andererseits eine Haltekraft auf das Reibelement 31 wirkt, die bei einer Relativbewegung zwischen Stößel 3 und Reibelement 31 bzw. zwischen Reibelement 31 und Gehäuse 2 eine Reibkraft verursacht.

Bei einer Auszugsbewegung des Stößels 3 wirkt reibungsbedingt eine Auszugskraft auf die Kappe 22, die auf das Gehäuse 2 übertragen wird. Dadurch, dass in axialer Richtung bezogen auf die Längsachse 4 die Schwenkachse 36 dem offenen Ende 11 näher zugewandt ist als die Rastnase 17 des Rasthakens 15, bewirkt die auf das Gehäuse 2 übertragene Reibungskraft ein Drehmoment auf den Rasthaken 15 derart, dass der Rasthaken 15 in das Gehäuseinnere zur Kappe 22, also in die Rastausnehmung, verlagert wird. Die Anordnung der Kappe 22 an dem Gehäuse 2 ist insbesondere selbstsichernd. Ein unbeabsichtigtes Lösen der Kappe 22 vom Gehäuse 2 ist ausgeschlossen.

## Patentansprüche

1. Reibungsdämpfer mit
a. einem eine Längsachse (4) aufweisenden rohrförmigen Gehäuse (2),
b. einem in dem Gehäuse (2) entlang der Längsachse (4) verlagerbaren Stößel (3), der an einem offenen Ende (11) des Gehäuses (2) herausgeführt ist,
c. einem am Stößel (3) anliegenden Reibelement (31),
d. einer an dem offenen Ende (11) des Gehäuses (2) mit axialer Vorspannung bezogen auf die Längsachse (4) angebrachten Kappe (22).

2. Reibungsdämpfer gemäß Anspruch 1, **dadurch gekennzeichnet, dass** am Gehäuse (2), insbesondere am offenen Ende (11), mindestens ein Rasthaken (15) angeordnet ist, der in eine Rastausnehmung (27) der Kappe (22) eingreift.

3. Reibungsdämpfer gemäß Anspruch 2, **dadurch gekennzeichnet, dass** die Rastausnehmung (27) an einer Außenseite der Kappe (22) angeordnet ist und der Rasthaken (15) in radialer Richtung bezogen auf die Längsachse (4) in die Rastausnehmung (27) einhakt.

4. Reibungsdämpfer gemäß Anspruch 2 oder 3, **dadurch gekennzeichnet, dass** der Rasthaken (15) eine entlang der Längsachse (4) orientierte Rasthakenlänge (L_{RH}) aufweist, die im demontierten Zustand der Kappe (22) größer ist als ein axialer Rastausnehmungsabstand (A_{RA}) der Kappe (22).

5. Reibungsdämpfer gemäß einem der vorstehenden Ansprüche, **dadurch gekennzeichnet, dass** das Gehäuse (2) am offenen Ende (11) eine unebene Stirnfläche (18, 19) aufweist.

6. Reibungsdämpfer gemäß Anspruch 5, **dadurch gekennzeichnet, dass** die Stirnfläche (18) im Bereich des Rasthakens (15) eine Vertiefung (19) aufweist.

7. Reibungsdämpfer gemäß einem der vorstehenden Ansprüche, **dadurch gekennzeichnet, dass** die Kappe (22) einen Radialbund (24) zum stirnseitigen Anliegen am offenen Ende (11) des Gehäuses (2) aufweist.

8. Reibungsdämpfer gemäß einem der vorstehenden Ansprüche, **dadurch gekennzeichnet, dass** die Kappe (22) verdrehsicher am Gehäuse (2) angeordnet ist.

9. Reibungsdämpfer gemäß einem der vorstehenden Ansprüche, **dadurch gekennzeichnet, dass** das Gehäuse (2) einen Aufnahmeabschnitt (12) zur Aufnahme der Kappe (22) aufweist, wobei sich der Aufnahmeabschnitt (12) insbesondere bis zum offenen Ende (11) erstreckt.

10. Reibungsdämpfer gemäß einem der vorstehenden Ansprüche, **dadurch gekennzeichnet, dass** das Reibelement (31) entlang der Längsachse (4) zwischen dem Gehäuse (2) und der Kappe (22) und/oder in radialer Richtung bezogen auf die Längsachse (4) zwischen dem Stößel (3) und der Kappe (22) vorgespannt angeordnet ist.

11. Reibungsdämpfer gemäß einem der vorstehenden Ansprüche, **dadurch gekennzeichnet, dass** die Kappe (22) hülsenartig ausgeführt ist, insbesondere einen umlaufend geschlossenen Hülsenabschnitt (23) aufweist und insbesondere ungeschlitzt ausgeführt ist.
